# EUROPEAN PATENT APPLICATION

(11) **EP 4 509 223 A1**
(43) Date of publication of application: **19.02.2025**
(21) Application number: 22957736.6
(22) Date of filing: 08.09.2022
(51) Int. Cl.: B05C 5/02, B05C 5/00

(54) **GLUING DEVICE**

(71) Applicant: Contemporary Amperex Technology Co., Limited, Ningde, Fujian 352100 (CN)
(72) Inventor: CHEN, Renyu, Ningde, Fujian 352100 (CN); WU, Jinwu, Ningde, Fujian 352100 (CN); CHEN, Xuenan, Ningde, Fujian 352100 (CN)
(74) Representative: Kraus & Lederer PartGmbB
(86) International application number: PCT/CN2022/117859
(87) International publication number: WO 2024/050764

(57) **Abstract**

Provided is a glue application apparatus (300). The glue application apparatus (300) includes: an outer housing (301), where a first end (3011) of the outer housing (301) is provided with a first opening (3012), and a second end (3013) opposite to the first end (3011) is provided with a glue injection hole (3014); and an inner housing (302), where the inner housing (302) is accommodated in the outer housing (301), an end of the inner housing (302) close to the first opening (3012) is a third end (3021), a flow channel (306) exists between the inner housing (302) and the outer housing (301), and the third end (3021) of the inner housing (302) and an opening face of the first opening (3012) form a glue outlet (303), so that a colloid flows from the glue injection hole (3014) to the glue outlet (303) through the flow channel (306). Glue application efficiency can be improved and processing costs can be saved.

## Description

### TECHNICAL FIELD

The present application relates to the field of glue application process technologies, and in particular, to a glue application apparatus.

### BACKGROUND

In an industrial production process, a glue application process is widely used in production and assembly processes, and many mechanical components are connected by means of adhesive bonding of a colloid.

In the bonding process of mechanical components, the application of the colloid requires a lot of manpower and material resources. Therefore, how to improve glue application efficiency and save processing costs is an urgent problem that needs to be solved.

### SUMMARY

Embodiments of the present application provide a glue application apparatus, which can improve glue application efficiency and save processing costs.

In a first aspect, a glue application apparatus is provided, including: an outer housing, where a first end of the outer housing is provided with a first opening, and a second end opposite to the first end is provided with a glue injection hole; and an inner housing, where the inner housing is accommodated in the outer housing, an end of the inner housing close to the first opening is a third end, a flow channel exists between the inner housing and the outer housing, and the third end of the inner housing and an opening face of the first opening form a glue outlet, so that a colloid flows from the glue injection hole to the glue outlet through the flow channel.

A glue application apparatus provided in an embodiment of the present application includes an outer housing and an inner housing, where the inner housing is accommodated in the outer housing, and a flow channel exists between the inner housing and the outer housing; the outer housing has a first opening, a third end of the inner housing close to the first opening and an opening face of the first opening form a glue outlet, and when a colloid is injected into an interior of the outer housing through a glue injection hole of the outer housing, the colloid reaches the glue outlet through the flow channel between the inner housing and the outer housing. During glue application, the glue outlet is disposed opposite to a to-be-processed component that needs to be applied with a colloid, the colloid is extruded from the glue outlet onto the to-be-processed component, thereby forming, on the to-be-processed component, a region applied with the colloid that has the same shape as the glue outlet. In other words, in a technical solution of the present application, according to the requirements for the size and shape of the region applied with the colloid on the to-be-processed component, different shapes of glue application apparatuses may be set, and the glue outlet of the glue application apparatus is adjusted to match the required size and shape of the region applied with the colloid on the to-be-processed component, thereby improving the glue application efficiency. Due to the region limitation of the glue outlet, it may be avoided that the colloid is applied to a region where the colloid does not need to be applied, thereby avoiding increasing a step for the subsequent processing of the redundant colloid. Therefore, processing time is saved, and processing costs are saved while reducing material waste.

In a possible implementation manner, the third end and the opening face of the first opening are in a same plane. Since the third end and the opening face of the first opening are in the same plane, the outer housing and the inner housing may simultaneously define the shape of the glue outlet, thereby further improving the degree of matching of the glue outlet and the size and shape of the region to be applied with the colloid on the to-be-processed component.

In a possible implementation manner, the third end is provided with a second opening. The third end is provided with the second opening, which can reduce processing materials of the inner housing and save processing costs while reducing the weight of the glue application apparatus.

In a possible implementation manner, an opening face of the second opening and the opening face of the first opening are in a same plane. Since the opening face of the second opening and the opening face of the first opening are in the same plane, the outer housing and the inner housing may simultaneously define the shape of the glue outlet, thereby further improving the degree of matching of the glue outlet and the size and shape of the region to be applied with the colloid on the to-be-processed component.

In one possible implementation manner, the glue application apparatus further includes a restraint structure, and the outer housing and the inner housing are connected through the restraint structure.

The outer housing and the inner housing are connected through the restraint structure, thereby improving the overall structural stability of the glue application apparatus.

In a possible implementation manner, the restraint structure is configured to define the flow channel. The flow channel between the inner housing and the outer housing is defined by the restraint structure, thereby ensuring that the colloid can smoothly reach the glue outlet through the flow channel.

In a possible implementation manner, the restraint structure is disposed on an inner surface of the outer housing, and the restraint structure is connected to an outer surface of the inner housing.

In other words, the restraint structure is located between the outer surface of the inner housing and the inner surface of the outer housing, thereby ensuring that the restraint structure can effectively define the flow channel between the outer surface of the inner housing and the inner surface of the outer housing. Meanwhile, the outer housing and the inner housing may be connected through the restraint structure.

In a possible implementation manner, the restraint structure is bonded to the outer surface of the inner housing. The restraint structure is bonded to the outer surface of the inner housing, which is simple and easy to operate and convenient to process.

In a possible implementation manner, the restraint structure is disposed on an outer surface of the inner housing, and the restraint structure is connected to an inner surface of the outer housing.

In other words, the restraint structure is located between the outer surface of the inner housing and the inner surface of the outer housing, thereby ensuring that the restraint structure can effectively define the flow channel between the outer surface of the inner housing and the inner surface of the outer housing. Meanwhile, the outer housing and the inner housing may be connected through the restraint structure.

In a possible implementation manner, the restraint structure is bonded to the inner surface of the outer housing. The restraint structure is bonded to the inner surface of the outer housing, which is simple and easy to operate and convenient to process.

In a possible implementation manner, the restraint structure includes a restraint member and a connecting portion, and the restraint member is connected to the connecting portion, so as to connect the outer housing with the inner housing. The outer housing is connected with the inner housing through the connection of the restraint member and the connecting portion, thereby improving the structural strength of the glue application apparatus.

In a possible implementation manner, the restraint member is disposed on an inner surface of the outer housing or an outer surface of the inner housing. The restraint member is disposed on the inner surface of the outer housing or the outer surface of the inner housing, thereby avoiding that there is no gap between the inner surface of the outer housing and the outer surface of the inner housing and they come into contact with each other, so as not to hinder the colloid from reaching the glue outlet.

In a possible implementation manner, the restraint member is a nut, and the connecting portion is a bolt. By matching and connecting the nut and the bolt, the outer housing and the inner housing are connected. The matching and connecting structure of the nut and the bolt is stable, and the connection is firm, thereby improving the stability of the connection between the outer housing and the inner housing.

In a possible implementation manner, the nut is disposed on an inner surface of the outer housing, the inner housing includes a first fixing hole, and the nut is connected to the bolt through the first fixing hole. The nut is connected to the bolt through the first fixing hole, thereby implementing the connection between the outer housing and the inner housing.

In a possible implementation manner, the nut is disposed on an outer surface of the inner housing, the outer housing includes a second fixing hole, and the nut is connected to the bolt through the second fixing hole. The nut is connected to the bolt through the second fixing hole, thereby implementing the connection between the outer housing and the inner housing.

In a possible implementation manner, the outer housing, the inner housing, and the restraint structure are integrally formed, which can improve the integrity of the glue application apparatus, thereby improving the structural strength and the stability thereof.

In a possible implementation manner, the outer housing includes a first wall, the first wall is disposed opposite to the first opening, and the glue injection hole is disposed on the first wall. The outer housing is provided with the first wall, and the glue injection hole is provided on the first wall, thereby facilitating a processing operation of the glue injection hole.

In a possible implementation manner, the glue outlet is in a shape of hollow rectangle.

In a possible implementation manner, the glue application apparatus further includes a hose, and the hose is inserted into the glue injection hole, to guide the colloid to be injected into the outer housing. The hose is used to guide the colloid to be injected into the interior of the outer housing, thereby avoiding glue leakage and saving materials, while making the injection process simple and easy to operate.

The present application provides a glue application apparatus, including an outer housing and an inner housing, where the inner housing is accommodated in the outer housing, and a flow channel exists between the inner housing and the outer housing; the outer housing has a first opening, a third end of the inner housing close to the first opening and an opening face of the first opening form a glue outlet, and when a colloid is injected into an interior of the outer housing through a glue injection hole of the outer housing, the colloid reaches the glue outlet through the flow channel between the inner housing and the outer housing. During glue application, the glue outlet is disposed opposite to a to-be-processed component that needs to be applied with a colloid, the colloid is extruded from the glue outlet onto the to-be-processed component, thereby forming, on the to-be-processed component, a region applied with the colloid that has the same shape as the glue outlet. In other words, in a technical solution of the present application, according to the requirements for the size and shape of the region applied with the colloid on the to-be-processed component, different shapes of glue application apparatuses may be set, and the glue outlet of the glue application apparatus is adjusted to match the required size and shape of the region applied with the colloid on the to-be-processed component, thereby improving the glue application efficiency. Due to the region limitation of the glue outlet, it may be avoided that the colloid is applied to a region where the colloid does not need to be applied, thereby avoiding increasing a subsequent step for the processing of the redundant colloid. Therefore, processing time is saved, and processing costs are saved while reducing material waste.

### BRIEF DESCRIPTION OF THE DRAWINGS

To describe the technical solutions in the embodiments of the present application more clearly, the following briefly describes the accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a schematic structural diagram of a vehicle disclosed in an embodiment of the present application;
FIG. 2 is a schematic diagram of an exploded structure of a battery disclosed in an embodiment of the present application;
FIG. 3 is a schematic structural diagram of a glue application apparatus disclosed in an embodiment of the present application;
FIG. 4 is a schematic structural diagram of an outer housing disclosed in an embodiment of the present application;
FIG. 5 is a schematic structural diagram of a glue application apparatus disclosed in an embodiment of the present application;
FIG. 6 is a schematic structural diagram of a glue application apparatus disclosed in an embodiment of the present application;
FIG. 7 is a schematic structural diagram of an outer housing and a restraint structure disclosed in an embodiment of the present application;
FIG. 8 is a schematic structural diagram of an inner housing and a restraint structure disclosed in an embodiment of the present application;
FIG. 9 is a schematic structural diagram of a glue application apparatus disclosed in an embodiment of the present application;
FIG. 10 is a schematic structural diagram of a glue application apparatus disclosed in an embodiment of the present application;
FIG. 11 is a schematic structural diagram of an outer housing and a hose disclosed in an embodiment of the present application; and
FIG. 12 is a schematic diagram of an exploded structure of a battery disclosed in an embodiment of the present application.

In accompanying drawings, the accompanying drawings are not drawn to actual scale.

### DESCRIPTION OF EMBODIMENTS

The implementation manner of the present application will be further described in detail below with reference to the accompanying drawings and embodiments. The following detailed description of the embodiments and the accompanying drawings are used to illustrate the principles of the present application in examples, but not to limit the scope of the present application, that is, the present application is not limited to the described embodiments.

In the description of the present application, it should be noted that the phrase "a plurality of" means two or more, unless otherwise specified. Orientations or positional relationships indicated by terms "upper", "lower", "left", "right", "inner", "outer" , or the like are only for the convenience of describing the present application and simplifying the description, and do not indicate or imply that an apparatus or element referred to must have a specific orientation, be constructed and operated in a specific orientation, and therefore cannot be understood as limitations to the present application. In addition, terms such as "first", "second" and "third" are only used for descriptive purposes, and should not be understood as indicating or implying relative importance. "Vertical" is not vertical in a strict sense, but within an allowable range of error. "Parallel" is not parallel in a strict sense, but within an allowable range of error.

Orientation words appearing in the following description are all directions shown in the drawings, and are not intended to limit the specific structure of the present application. In the description of the present application, it should be further noted that unless otherwise explicitly specified and defined, terms such as "installation", "interconnection", and "connection" should be interpreted in a broad sense, for example, it may be a fixed connection, or a detachable connection, or an integrated connection; or it may be a direct connection, or an indirect connection through an intermediate medium. Those of ordinary skill in the art can understand the specific meanings of the above terms in the present application according to specific situations.

The term "and/or" in the present application is only a kind of association relationship describing associated objects, which means that there may be three kinds of relationships. For example, A and/or B may mean the following three cases: A exists alone, both A and B exist at the same time, and B exists alone. In addition, the character "/" in the present application generally indicates that the associated objects before and after the character are in an "or" relationship.

Unless otherwise defined, all technical and scientific terms used herein have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions. In the specification and the claims or the above accompanying drawings of the present application, terms such as "first" and "second" are used for distinguishing different objects, rather than describing specific order or primary-secondary relationship.

A word "embodiment" referred to in the present application means that a particular feature, structure, or characteristic described in combination with the embodiment can be included in at least one embodiment of the present application. The appearances of the word in various places in the specification are not necessarily all referring to the same embodiment, nor are separate or alternative embodiments mutually exclusive of other embodiments. Those skilled in the art understand, in explicit and implicit manners, that an embodiment described in the present application may be combined with other embodiments.

In the embodiments of the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. The battery cell may be cylindrical, flat, cuboid or in another shape, which is not limited by the embodiment of the present application. The battery cells are generally divided into three types according to the way of packaging: cylindrical battery cells, prismatic battery cells and pouch battery cells, which is not limited by the embodiment of the present application.

The battery mentioned in the embodiment of the present application refers to a single physical module that includes one or more battery cells to provide a higher voltage and capacity. For example, the battery mentioned in the present application may include a battery module, a battery pack, and the like. The battery generally includes a box for enclosing one or more battery cells. The box can prevent liquid or other foreign matters from affecting the charging or discharging of a battery cell.

In order to ensure the safety of the battery, a certain thickness of colloid is applied to edge regions of outer surfaces of a plurality of battery cells in the box arranged along one direction, so that adjacent battery cells can be bonded together. On the one hand, the structural strength of the battery is enhanced; and on the other hand, the colloid enables two adjacent battery cells to have a certain gap therebetween, so as to provide an expansion space for the battery cells, thereby improving the performance of the battery.

In the prior art, a colloid is generally applied to an edge region of an outer surface of a battery cell step by step. For example, a colloid is applied to one hollow rectangular-shaped outer surface of a prismatic battery cell, and four steps are required for the application of the colloid to a region close to a rectangular-shaped frame thereof, so as to form a hollow-rectangle-shaped glue application region, and in this case, the glue application efficiency is low. In addition, such a glue application method may cause problems such as uneven glue application, a glue applied region exceeding an expected glue application range, and the like. After glue application, subsequent processing needs to be performed to remove the redundant colloid, which causes material waste.

In view of this, the present application provides a glue application apparatus 300, including an outer an outer housing and an inner housing, where the inner housing is accommodated in the outer housing, and a flow channel exists between the inner housing and the outer housing; the outer housing has a first opening, a third end of the inner housing close to the first opening and an opening face of the first opening form a glue outlet, and when a colloid is injected into an interior of the outer housing through a glue injection hole of the outer housing, the colloid reaches the glue outlet through the flow channel between the inner housing and the outer housing. During glue application, the glue outlet is disposed opposite to a to-be-processed component that needs to be applied with a colloid, the colloid is extruded from the glue outlet onto the to-be-processed component, thereby forming, on the to-be-processed component, a region applied with the colloid that has the same shape as the glue outlet. In other words, in a technical solution of the present application, according to the requirements for the size and shape of the region applied with the colloid on the to-be-processed component, different shapes of glue application apparatuses may be set, and the glue outlet of the glue application apparatus is adjusted to match the required size and shape of the region applied with the colloid on the to-be-processed component, thereby improving the glue application efficiency. Due to the region limitation of the glue outlet, it may be avoided that the colloid is applied to a region where the colloid does not need to be applied, thereby avoiding increasing a step for the subsequent processing of the redundant colloid. Therefore, processing time is saved, and processing costs are saved while reducing material waste.

The glue application apparatus described in the embodiments of the present application is applicable to various apparatuses using the glue application apparatus for gluing, such as a battery, a handcraft, a furniture product, and a toy.

It should be understood that the glue application apparatus described in the embodiments of the present application is not only limited to be applicable to the apparatuses described above, but can also be applicable to all apparatuses using the glue application apparatus for gluing.

Taking a battery as an example, a battery formed by arranging a plurality of battery cells whose surfaces are applied with a colloid by using a glue application apparatus has a high structural strength. The colloid enables adjacent battery cells to have a gap therebetween, so as to provide an expansion space for the battery cells, thereby improving the performance of the battery.

Technical solutions described in embodiments of the present application are applicable to various apparatuses using a battery, for example, a mobile phone, a portable device, a notebook computer, an electromobile, an electric toy, an electric tool, an electric vehicle, a ship, a spacecraft, or the like. For example, the spacecraft may include an airplane, a rocket, a space shuttle, a spaceship, and the like.

It should be understood that technical solutions described in embodiments of the present application are not only limited to the device described above, but also applicable to all devices using a battery. However, for the sake of brief illustration, description is made by an example of an electric vehicle in the following embodiments.

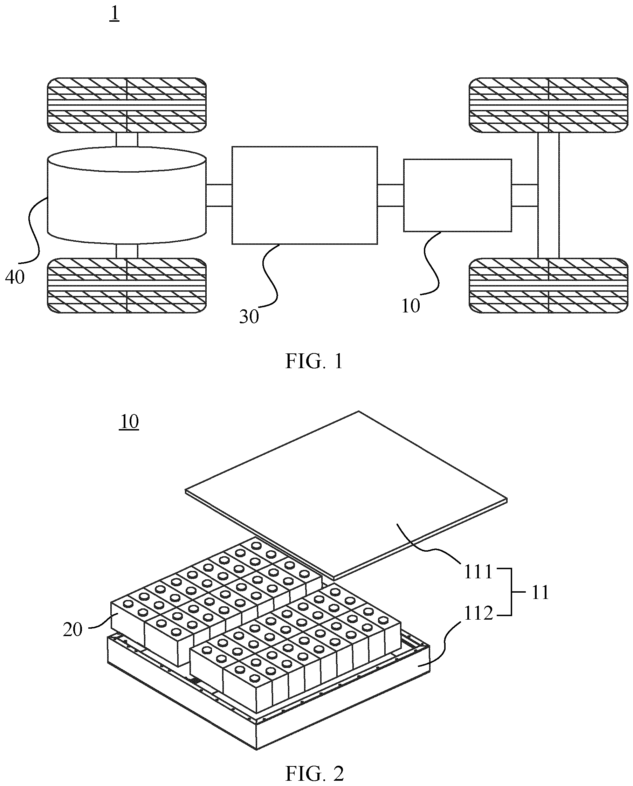

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be disposed inside the vehicle 1, and the controller 30 is configured to control the battery 10 to supply power to the motor 40. For example, the battery 10 may be disposed at the bottom, head or tail of the vehicle 1. The battery 10 may be used for supplying power to the vehicle 1. For example, the battery 100 may serve as an operation power supply of the vehicle 1, and is used for a circuit system of the vehicle 1, for example, for a working power demand of the vehicle 1 during startup, navigation, and running. In another embodiment of the present application, the battery 10 can not only serve as an operation power supply of the vehicle 1, but also as a driving power supply of the vehicle 1, replacing or partially replacing fuel or natural gas to provide driving power for the vehicle 1.

In order to satisfy different power usage requirements, the battery 10 can include a plurality of battery cells. For example, as shown in FIG. 2, FIG. 2 is a schematic structural diagram of a battery 10 according to an embodiment of the present application. The battery 10 may include a plurality of battery cells 20. According to different power requirements, the number of battery cells 20 may be set to any value. The plurality of battery cells 20 may be connected in series, in parallel or in series-parallel to implement larger capacity or power. Since there may be many battery cells 20 included in each battery 10, the battery cells 20 may be arranged in groups for convenience of installation, and each group of battery cells 20 constitutes a battery module. The number of battery cells 20 included in the battery module is not limited and may be set as required. The battery may include a plurality of battery modules, and these battery modules may be connected in series, in parallel or in series-parallel.

Optionally, the battery 10 may also have other structures. For example, the battery 10 may further include a bus component, which is configured to realize electrical connection between the plurality of battery cells 20, such as parallel connection, series connection or series-parallel connection. Specifically, the bus component can realize the electrical connection between the battery cells 20 by connecting electrode terminals of the battery cells 20. Further, the bus component may be fixed to the electrode terminals of the battery cell 20 by welding. Electric energy of the plurality of battery cells 20 can be further drawn out by a conductive mechanism passing through the box. Optionally, the conductive mechanism may also belong to the bus component.

The battery 10 may further include a box 11 (or also referred to as a covering), an interior of the box 11 is in a hollow structure, and the plurality of battery cells 20 are accommodated in the box 11. As shown in FIG. 2, the box 11 may include two portions, which are herein referred to as a cover portion 111 and a main body portion 112 (or also referred to as an upper box and a lower box), and the cover portion 111 and the main body portion 112 cover each other. The shapes of the cover portion 111 and the second box portion 112 may be determined according to the combined shape of the plurality of battery cells 20, and at least one of the cover portion 111 and the second box portion 112 may have an opening. For another example, only one of the cover portion 111 and the main body portion 112 included in the box 11 may be a hollow cuboid with an opening, while the other may be a plate to cover the opening. For example, as shown in FIG. 2, here, description is made by an example that the second box portion 112 is a hollow cuboid and has only one face that is an opening face, while the cover portion 111 is in a plate shape. Therefore, the cover portion 111 covers the opening of the second box portion 112 to form the box 11 with a closed cavity, which can be used to accommodate the plurality of battery cells 20.

Optionally, the cover portion 111 and the main body portion 112 included in the box 11 in the embodiment of the present application may also have other shapes, for example, the cover portion 111 and the main body portion 112 each may be a hollow cuboid and each have only one surface as an opening face, an opening of the cover portion 111 is arranged opposite to an opening of the second box portion 112, and the cover portion 111 and the second box portion 112 are fastened to each other to form the box 11 with a closed cavity. The plurality of battery cells 20 are combined in parallel, in series or in series-parallel and then placed in the box formed by fastening the cover portion 111 and the second box portion 112.

A glue application apparatus provided by an embodiment of the present application will be described in detail with reference to the accompanying drawings.

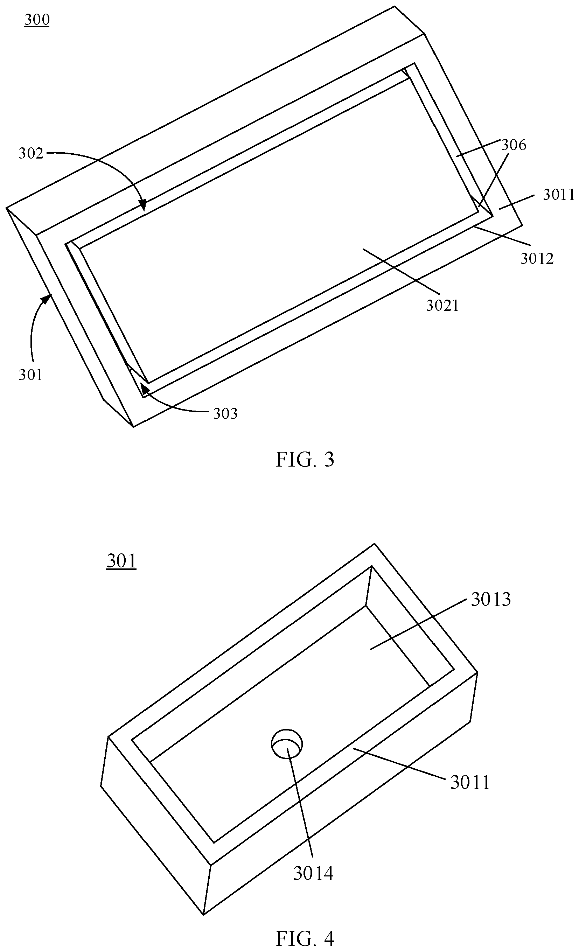

FIG. 3 is a schematic structural diagram of a glue application apparatus 300 according to the present application. As shown in FIG. 3, the glue application apparatus 300 includes an outer housing 301 and an inner housing 302. The inner housing 302 is accommodated in the outer housing 301. A flow channel 306 exists between the inner housing 302 and the outer housing 301. A first end 3011 of the outer housing 301 is provided with a first opening 3012. A third end 3021 of the inner housing 302 close to the first opening 3012 and an opening face of the first opening 3012 form a glue outlet 303.

As shown in FIG. 4, a second end 3013 of the outer housing 301 opposite to the first end 3011 is provided with a glue injection hole 3014. A colloid injected through the glue injection hole 3014 reaches the glue outlet 303 through the flow channel 306 between the inner housing 302 and the outer housing 301.

A colloid refers to a natural or synthetic, organic, or inorganic substance that enables two or more types of parts or materials to be connected together through adhesion and cohesion, and the like of an interface, such as water glasses, cements, gypsum, and rubber adhesives.

In an embodiment of the present application, a glue application apparatus 300 includes an outer housing 301 and an inner housing 302, where the inner housing 302 is accommodated in the outer housing 301, and a flow channel 306 exists between the inner housing 302 and the outer housing 301; the outer housing 301 has a first opening 3012, a third end 3021 of the inner housing 302 close to the first opening 3012 and an opening face of the first opening 3012 form a glue outlet 303, and when a colloid is injected into an interior of the outer housing 301 through a glue injection hole 3014 of the outer housing 301, the colloid reaches the glue outlet 303 through the flow channel 306 between the inner housing 302 and the outer housing 301. During glue application, the glue outlet 303 is disposed opposite to a to-be-processed component that needs to be applied with a colloid, the colloid is extruded from the glue outlet 303 onto the to-be-processed component, thereby forming, on the to-be-processed component, a region applied with the colloid that has the same shape as the glue outlet 303. In other words, in a technical solution of the present application, according to the requirements for the size and shape of the region applied with the colloid on the to-be-processed component, different shapes of glue application apparatuses 300 may be set, and the glue outlet 303 of the glue application apparatus 300 is adjusted to match the required size and shape of the region applied with the colloid on the to-be-processed component, thereby improving the glue application efficiency. Due to the region limitation of the glue outlet 303, it may be avoided that the colloid is applied to a region where the colloid does not need to be applied, thereby avoiding increasing a step for the subsequent processing of the redundant colloid. Therefore, processing time is saved, and processing costs are saved while reducing material waste.

Optionally, in an embodiment of the present application, the outer housing 301 includes a first wall, the first wall is disposed opposite to the first opening 3012, and the glue injection hole 3014 is disposed on the first wall. As shown in FIG. 4, the outer housing 301 and the inner housing 302 are of a rectangular-shaped structure, the first wall of the outer housing 301 is a first end shown in FIG. 4, and the glue injection hole 3014 is disposed at the first end.

It should be understood that, the rectangular-shaped structure of the outer housing 301 and the inner housing 302 shown in FIG. 4 is only an exemplary illustration, which does not limit the present application.

Optionally, in an embodiment of the present application, the third end 3021 and the opening face of the first opening 3012 are in a same plane. Since the third end 3021 and the opening face of the first opening 3012 are in the same plane, the outer housing 301 and the inner housing 302 may simultaneously define the shape of the glue outlet 303, thereby further improving the degree of matching of the glue outlet 303 and the size and shape of the region to be applied with the colloid on the to-be-processed component.

Optionally, in an embodiment of the present application, the glue outlet 303 is in a shape of hollow rectangle. With continued reference to FIG. 4, the outer housing 301 and the inner housing 302 are of a rectangular-shaped structure, and the glue outlet 303 is in a shape of hollow rectangle.

It should be understood that, the hollow-rectangle-shaped glue outlet 303 shown in FIG. 4 is only an exemplary illustration, which does not limit the present application.

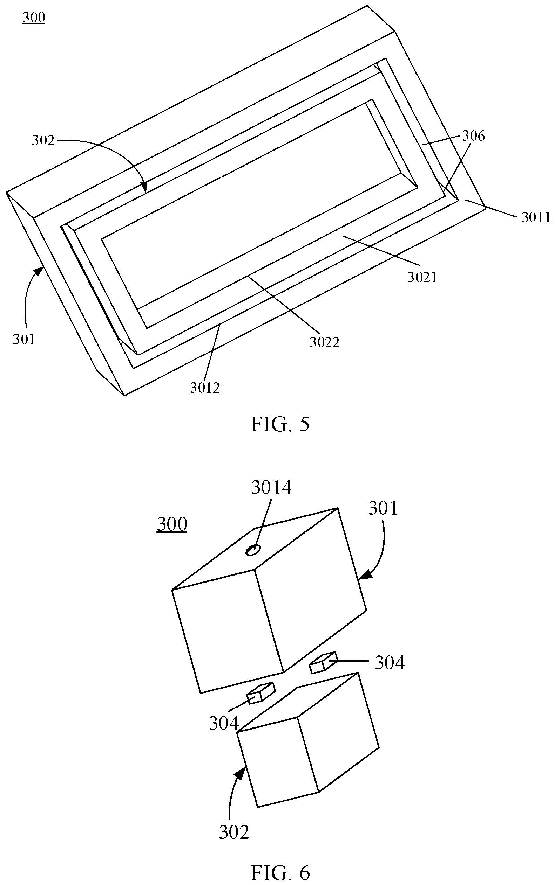

Optionally, in an embodiment of the present application, as shown in FIG. 5, the third end 3021 is provided with a second opening 3022. The third end 3021 is provided with the second opening 3022, which can reduce processing materials of the inner housing 302 and save processing costs while reducing the weight of the glue application apparatus 300.

It should be understood that, the third end 3021 provided with the second opening 3022 shown in FIG. 4 is only an exemplary illustration, which does not limit the present application. In an embodiment of the present application, the third end 3021 may not be provided with the second opening 3022, for example, the third end 3021 may be a plane.

Optionally, in an embodiment of the present application, an opening face of the second opening 3022 and the opening face of the first opening 3012 are in a same plane. Since the opening face of the second opening 3022 and the opening face of the first opening 3012 are in the same plane, the outer housing 301 and the inner housing 302 may simultaneously define the shape of the glue outlet 303, thereby further improving the degree of matching of the glue outlet 303 and the size and shape of the region to be applied with the colloid on the to-be-processed component.

Optionally, in an embodiment of the present application, as shown in FIG. 6, the glue application apparatus 300 further includes a restraint structure 304, and the outer housing 301 and the inner housing 302 are connected through the restraint structure 304.

The outer housing 301 and the inner housing 302 are connected through the restraint structure 304, thereby improving the overall structural stability of the glue application apparatus 300.

It should be noted that the restraint structure 304 shall not cover the glue injection hole 3014, to avoid hindering the colloid from smoothly reaching the glue outlet 303.

Optionally, in an embodiment of the present application, the restraint structure 304 is configured to define the flow channel 306. The flow channel 306 between the inner housing 302 and the outer housing 301 is defined by the restraint structure 304, thereby ensuring that the colloid can smoothly reach the glue outlet 303 through the flow channel 306.

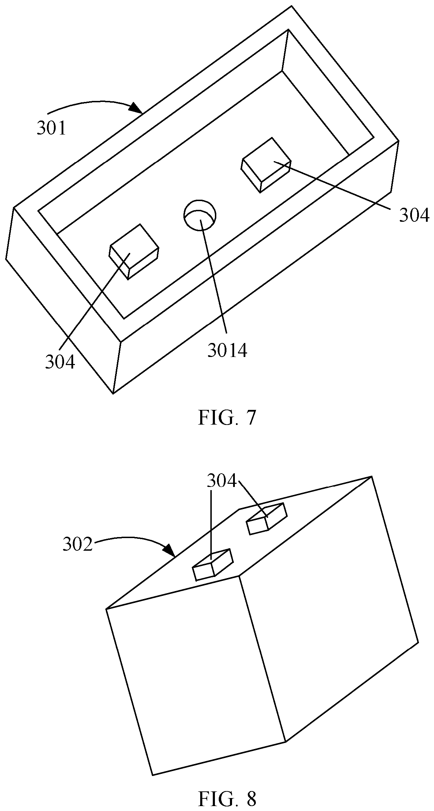

Optionally, in an embodiment of the present application, as shown in FIG. 7, the restraint structure 304 is disposed on an inner surface of the outer housing 301, and the restraint structure 304 is connected to an outer surface of the inner housing 302.

In other words, the restraint structure 304 is located between the outer surface of the inner housing 302 and the inner surface of the outer housing 301, thereby ensuring that the restraint structure 304 can effectively define the flow channel 306 between the outer surface of the inner housing 302 and the inner surface of the outer housing 301. Meanwhile, the outer housing 301 and the inner housing 302 may be connected through the restraint structure 304.

Optionally, in an embodiment of the present application, the restraint structure 304 is bonded to the outer surface of the inner housing 302. The restraint structure 304 is bonded to the outer surface of the inner housing 302, which is simple and easy to operate and convenient to process.

Optionally, in an embodiment of the present application, as shown in FIG. 8, the restraint structure 304 is disposed on an outer surface of the inner housing 302, and the restraint structure 304 is connected to an inner surface of the outer housing 301.

In other words, the restraint structure 304 is located between the outer surface of the inner housing 302 and the inner surface of the outer housing 301, thereby ensuring that the restraint structure 304 can effectively define the flow channel 306 between the outer surface of the inner housing 302 and the inner surface of the outer housing 301. Meanwhile, the outer housing 301 and the inner housing 302 may be connected through the restraint structure 304.

Optionally, in an embodiment of the present application, the restraint structure 304 is bonded to the inner surface of the outer housing 301. The restraint structure 304 is bonded to the inner surface of the outer housing 301, which is simple and easy to operate and convenient to process.

Optionally, in an embodiment of the present application, the restraint structure 304 includes a restraint member and a connecting portion, and the restraint member is connected to the connecting portion, so as to connect the outer housing 301 with the inner housing 302. The outer housing 301 is connected with the inner housing 302 through the connection of the restraint member and the connecting portion, thereby improving the structural strength of the glue application apparatus 300.

Specifically, the restraint member and the connecting portion may be connected by means of a mechanical structure. For example, the restraint member and the connecting portion may be mortise and tenon in a mortise and tenon structure, respectively, and they are connected by means of the mortise and tenon structure, so that the outer housing 301 is connected to the inner housing 302; and the restraint member and the connecting portion may also be connected by means of adhesive bonding, which is not limited in the present application.

Optionally, in an embodiment of the present application, the restraint member is disposed on an inner surface of the outer housing 301 or an outer surface of the inner housing 302.

The restraint member is disposed on the inner surface of the outer housing 301 or the outer surface of the inner housing 302, thereby avoiding that there is no gap between the inner surface of the outer housing 301 and the outer surface of the inner housing 302 and they come into contact with each other, so as not to hinder the colloid from reaching the glue outlet 303.

Optionally, in an embodiment of the present application, the restraint member is a nut 3041, and the connecting portion is a bolt 3042. By matching and connecting the nut 3041 and the bolt 3042, the outer housing 301 and the inner housing 302 are connected. The matching and connecting structure of the nut 3041 and the bolt 3042 is stable, and the connection is firm, thereby improving the stability of the connection between the outer housing 301 and the inner housing 302.

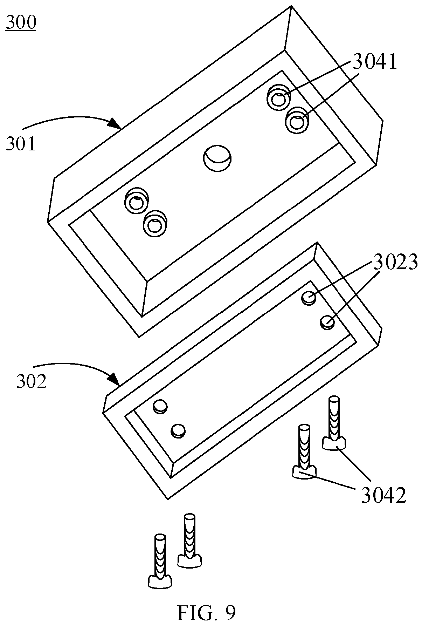

Specifically, as shown in FIG. 9, the nut 3041 is disposed on an inner surface of the outer housing 301, the inner housing 302 includes a first fixing hole 3023, and the nut 3041 is connected to the bolt 3042 through the first fixing hole 3023. The nut 3041 is connected to the bolt 3042 through the first fixing hole 3023, thereby implementing the connection between the outer housing 301 and the inner housing 302.

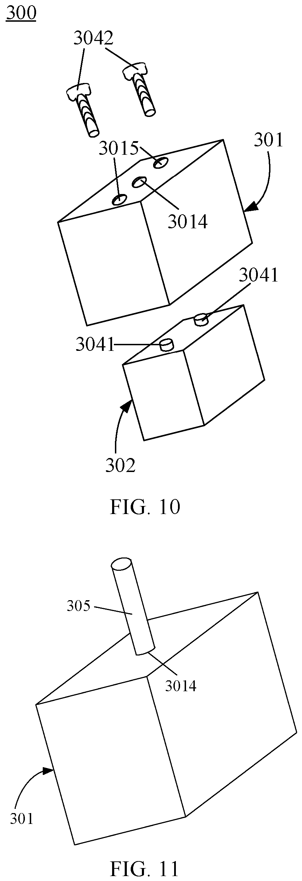

Optionally, as shown in FIG. 10, the nut 3041 is disposed on an outer surface of the inner housing 302, the outer housing 301 includes a second fixing hole 3015, and the nut 3041 is connected to the bolt 3042 through the second fixing hole 3015. The nut 3041 is connected to the bolt 3042 through the second fixing hole 3015, thereby implementing the connection between the outer housing 301 and the inner housing 302.

Optionally, in an embodiment of the present application, the outer housing 301, the inner housing 302, and the restraint structure 304 are integrally formed, which can improve the integrity of the glue application apparatus 300, thereby improving the structural strength and the stability thereof.

The integrally formed structure of the outer housing 301, the inner housing 302, and the restraint structure 304 may be implemented by a stamping process, or formed by other processing techniques, which is not limited in the present application.

Optionally, in an embodiment of the present application, as shown in FIG. 11, the glue application apparatus 300 further includes a hose 305, and the hose 305 is inserted into the glue injection hole 3014, to guide the colloid to be injected into the outer housing 301. The hose 305 is used to guide the colloid to be injected into the interior of the outer housing 301, thereby avoiding glue leakage and saving materials, while making the injection process simple and easy to operate.

In the forgoing part, the technical solution of the present application is described in detail by taking the outer housing and the inner housing having a rectangular-shaped structure as an example, but the present application is not limited thereto. In the technical solutions of the present application, structures of the outer housing and the inner housing are not limited thereto, for example, the outer housing and the inner housing may also be cylinders, cones, which is not limited in the present application. In addition, the restraint structure and restraint member described above are disposed on the inner surface of the outer housing or the outer surface of the inner housing, and are not limited to be disposed on the surfaces shown in FIGS. 4 to 11. For example, the restraint structure and restraint member may also be disposed on inner surfaces of four side walls of the outer housing or outer surfaces of four side walls of the inner housing shown in FIGS. 4 to 11, which is not limited in the present application. Meanwhile, the number of the restraint structures shown in FIGS. 4 to 11 is only an exemplary description, which does not constitute a limitation to the present application, and may be one or more and is selected according to actual processing requirements, which is not limited in the present application.

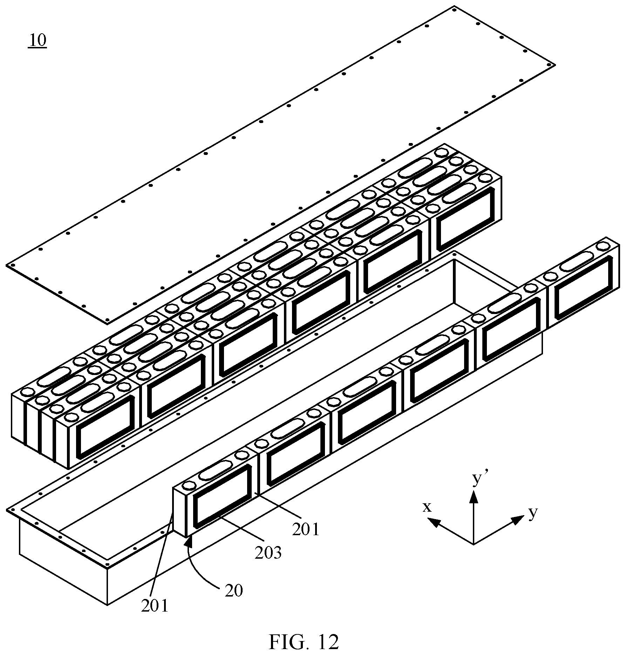

The embodiment of the present application also provides a battery 10. As shown in FIG. 12, the battery 10 includes a plurality of battery cells 20 arranged along a first direction x.

A battery cell 20 includes two third walls 201 oppositely arranged along the first direction x, and a colloid 203 is provided on outer surfaces of the two third walls 201. The colloid 203 may be applied to an outer surface of a third wall 201 by the glue application apparatus 300 in the foregoing embodiment.

The colloid 203 is applied to outer surfaces of the battery cell 20, and the plurality of battery cells 20 are connected by the colloid 203, which improves the structural strength of the battery 10. Meanwhile, the glue 203 enables adjacent battery cells 20 to have a gap therebetween, so as to provide an expansion space for the battery cells 20, thereby improving the performance of the battery 10.

Optionally, in an embodiment of the present application, as shown in FIG. 12, in the first direction x, a size of the colloid is 0.5-1.5 mm.

When the size of the colloid in the first direction x is too large, more space in the battery 10 is occupied, which affects the energy density of the battery 10. When the size of the colloid 203 in the first direction x is too small, the adhesive capacity is weak, and the structural strength of the battery 10 cannot be effectively improved. Therefore, the size of the colloid 203 in the first direction x is set to be 0.5-1.5 mm, so as to ensure a higher energy density of the battery 10 while improving the structural strength of the battery 10.

Optionally, in an embodiment of the present application, as shown in FIG. 12, in a second direction y perpendicular to the first direction x, a size of the colloid is 1-5 mm.

It should be understood that the second direction may also be the y' direction as shown in FIG. 12.

The size of the colloid in the second direction is set to be 1-5 mm, so that sufficient space is reserved between the battery cells 20 for expansion of the battery cells 20 while ensuring the adhesive strength, thereby improving the performance of the battery 10.

The embodiment of the present application further provides a power consumption device, including a battery 10 in the foregoing embodiments, and the battery 10 is configured to provide electric energy. Optionally, the power consumption device may be a vehicle 1, a ship, a spacecraft, or the like, but the embodiments of the present application are not limited thereto.

While the present application has been described with reference to preferred embodiments, various improvements may be made and equivalents may be used to substitute parts therein without departing from the scope of the present application. In particular, as long as there is no structural conflict, technical features mentioned in various embodiments can be combined in any manner. The present application is not limited to the specific embodiments disclosed herein, but includes all technical solutions falling within the scope of the claims.

## Claims

1. A glue application apparatus (300), comprising:
an outer housing (301), wherein a first end (3011) of the outer housing (301) is provided with a first opening (3012), and a second end (3013) opposite to the first end (3011) is provided with a glue injection hole (3014); and
an inner housing (302), wherein the inner housing (302) is accommodated in the outer housing (301), an end of the inner housing (302) close to the first opening (3012) is a third end (3021), a flow channel (306) exists between the inner housing (302) and the outer housing (301), and the third end (3021) of the inner housing (302) and an opening face of the first opening (3012) form a glue outlet (303), so that a colloid flows from the glue injection hole (3014) to the glue outlet (303) through the flow channel (306).

2. The glue application apparatus (300) according to claim 1, wherein the third end (3021) and the opening face of the first opening (3012) are in a same plane.

3. The glue application apparatus (300) according to claim 1 or 2, wherein the third end (3021) is provided with a second opening (3022).

4. The glue application apparatus (300) according to claim 3, wherein an opening face of the second opening (3022) and the opening face of the first opening (3012) are in a same plane.

5. The glue application apparatus (300) according to any one of claims 1 to 4, wherein the glue application apparatus (300) further comprises a restraint structure (304), and the outer housing (301) and the inner housing (302) are connected through the restraint structure (304).

6. The glue application apparatus (300) according to claim 5, wherein the restraint structure (304) is configured to define the flow channel (306).

7. The glue application apparatus (300) according to claim 5 or 6, wherein the restraint structure (304) is disposed on an inner surface of the outer housing (301), and the restraint structure (304) is connected to an outer surface of the inner housing (302).

8. The glue application apparatus (300) according to claim 7, wherein the restraint structure (304) is bonded to the outer surface of the inner housing (302).

9. The glue application apparatus (300) according to claim 5 or 6, wherein the restraint structure (304) is disposed on an outer surface of the inner housing (302), and the restraint structure (304) is connected to an inner surface of the outer housing (301).

10. The glue application apparatus (300) according to claim 9, wherein the restraint structure (304) is bonded to the inner surface of the outer housing (301).

11. The glue application apparatus (300) according to claim 5 or 6, wherein the restraint structure (304) comprises a restraint member and a connecting portion, and the restraint member is connected to the connecting portion, so as to connect the outer housing (301) with the inner housing (302).

12. The glue application apparatus (300) according to claim 11, wherein the restraint member is disposed on an inner surface of the outer housing (301) or an outer surface of the inner housing (302).

13. The glue application apparatus (300) according to claim 11 or 12, wherein the restraint member is a nut (3041), and the connecting portion is a bolt (3042).

14. The glue application apparatus (300) according to claim 13, wherein the nut (3041) is disposed on an inner surface of the outer housing (301), the inner housing (302) comprises a first fixing hole (3023), and the nut (3041) is connected to the bolt (3042) through the first fixing hole (3023).

15. The glue application apparatus (300) according to claim 13, wherein the nut (3041) is disposed on an outer surface of the inner housing (302), the outer housing (301) comprises a second fixing hole (3015), and the nut (3041) is connected to the bolt (3042) through the second fixing hole (3015).

16. The glue application apparatus (300) according to any one of claims 5 to 12, wherein the outer housing (301), the inner housing (302), and the restraint structure (304) are integrally formed.

17. The glue application apparatus (300) according to any one of claims 1 to 16, wherein the outer housing (301) comprises a first wall, the first wall is disposed opposite to the first opening (3012), and the glue injection hole (3014) is disposed on the first wall.

18. The glue application apparatus (300) according to any one of claims 1 to 17, wherein the glue outlet (303) is in a shape of hollow rectangle.

19. The glue application apparatus (300) according to any one of claims 1 to 18, wherein the glue application apparatus (300) further comprises a hose (305), and the hose (305) is inserted into the glue injection hole (3014), to guide the colloid to be injected into the outer housing (301).
